# EUROPEAN PATENT APPLICATION

(11) **EP 1 647 901 A1**
(43) Date of publication of application: **19.04.2006**
(21) Application number: 05022464.1
(22) Date of filing: 14.10.2005
(51) Int. Cl.: G06F 17/30, H04L 12/26

(54) **System and method for collecting network performance data and storing it in a single relational table.**

(30) Priority: 15.10.2004 KR 2004082827
(71) Applicant: Samsung Electronics Co., Ltd., Yeongtong-gu Suwon-si, Gyeonggi-do (KR)
(72) Inventor: Hwang, Jo-Gyoung, Suwon-si, Gyeonggi-do (KR)
(74) Representative: Lang, Johannes

(57) **Abstract**

The invention relates to a system and method for processing performance management (PM) data using a single table, by which the PM data created from a number of base stations in a high capacity network system can be stored as a database. In the PM data processing system, a data collector collects at least one of the PM data, re-writing the collected PM data into a file type and transferring the file type PM data via FTP (file transfer protocol). A data parser parses the file type PM data into text files. An SQL (Structured Query Language) loader loads a predetermined number of the text files into at least one group, transacts the text files according to groups, and allocates the transacted text files to a single table. A storage stores the single table of the SQL loader and metadata mapped with the PM data of the single table as a database. In this way, the invention can rapidly and efficiently process the PM data created as well as improve recognition by users using a single table, thereby maximizing the performance of processing massive data in the single table.

## Description

### BACKGROUND OF THE INVENTION

### 1. Field of the Invention

The present invention relates to a system and method for processing performance management (PM) data using a single table, more particularly, by which the performance management (PM) data created in a high capacity network system can be stored as a database.

### 2. Description of the Related Art

In general, performance management (PM) data including signal types and parameters are created from a number of base stations in a network system. Each of the base stations creates performance management (PM) data according to the signal type by allocating call status with parameters. Then, a system having a collecting function such as a network system collects the performance management (PM) data according to event times such as year, month, day, hour and so on.

Although the use of communication terminals has been increased and performance management (PM) data with respect to resultant calls have been exponentially increased, tables are generated according to signal types. This causes a problem in that it becomes difficult to actively cope with massive capacity network situations or the change of network structures in which management range increases dramatically.

That is, under a conventional PM structure in which transaction takes place in each table according to the signal type, it is almost impossible to completely process at least 100,000 performance management (PM) data in a unit of time (e.g., 5 or 15 minutes). Furthermore, under loads exceeding management range, instability factors take place in the network system and thus it is impossible to normally operate the system.

### SUMMARY OF THE INVENTION

It is, therefore. an object of the present invention to provide a system and method for processing performance management (PM) data using a single table, which can efficiently process the performance management (PM) data created from a massive capacity network system as well as improve recognition by users using the single table.

According to an aspect of the invention for realizing the above objects, there is provided a performance management (PM) data processing system using a single table to store performance management (PM) data created from a number of base stations in a network system as a data base, comprising: a data collector for collecting at least one of the performance management (PM) data, re-writing the collected performance management (PM) data into a file type and transferring the file type performance management (PM) data via FTP (File Transfer Protocol); a data parser for parsing the file type performance management (PM) data into text files; an SQL (Structured Query Language) loader for loading a predetermined number of the text files into at least one group, transacting the text files according to groups, and allocating the transacted text files to a single table; and a storage for storing the single table of the SQL loader and metadata mapped with the performance management (PM) data of the single table as a database. Metadata is defined as a definition or description of data.

Preferably, the performance management (PM) data processing system may further comprise: a view schema generator for parsing the performance management (PM) data read from the metadata of the single table into a predetermined form recognizable by a user to generate a view schema; and a user interface for operating the view schema generator to provide the view schema to a user terminal or reading the metadata from the storage to provide the metadata to the user terminal.

Preferably, the view schema generator may execute a view algorithm to generate the view schema according to signal types, wherein the view algorithm may comprise the steps of: receiving a parsing command from the user interface; sequentially reading the metadata mapped with the performance management (PM) data of the single table in response to the parsing command; retrieving a signal type designated by the metadata to read a corresponding performance management (PM) data; parsing the read performance management (PM) data into a view schema and temporarily storing the view schema into an imaginary vector memory; and visually providing the view schema to a user terminal.

Preferably, the view schema may comprise an imaginary view generated via the view algorithm, and the metadata may contain parameters and names which are sequentially arranged according to signal types. In addition, the performance management (PM) data may preferably comprise performance, operation and management data related with call connections occurring from a base station, and be classified according to signal types.

According to an aspect of the invention for realizing the above objects, there is provided a performance management (PM) data processing method using a single table to store performance management (PM) data created from a number of base stations in a network system as a data base, the method comprising the steps of: collecting at least one of the performance management (PM) data, re-writing the collected performance management (PM) data into a file type and transferring the file type performance management (PM) data via FTP; parsing the file type performance management (PM) data into text files; grouping a predetermined number of the text files into at least one group, transacting the text files according to groups, and allocating the transacted text files to a single table; and storing the single table as a database according to groups.

The performance management (PM) data processing method may further comprise at least one of the steps of sequentially storing the metadata mapped with the performance management (PM) data of the single table as a database; parsing the performance management (PM) data read from the metadata of the single table into a predetermined form recognizable by a user to generate a view schema; and selectively providing the view schema or the metadata to a user terminal.

Preferably, the parsing step may comprise executing a view algorithm to parse the view schema of the performance management (PM) data from the metadata according to signal types, and the view schema may comprise an imaginary view generated via the view algorithm.

Preferably, the view algorithm may comprise the steps of: receiving a parsing command from the user interface; sequentially reading the metadata mapped with the performance management (PM) data of the single table in response to the parsing command; retrieving a signal type designated by the metadata to read a corresponding performance management (PM) data; parsing the read performance management (PM) data into a view schema and temporarily storing the view schema into an imaginary vector memory; and visually providing the view schema to a user terminal.

Preferably, the performance management (PM) data may comprise performance, operation and management data related with call connections occurring from base station, and is classified according to signal types, each of the base stations may support at least one of wired and wireless communications, and the grouping step may group the performance management (PM) data by a number of at least 103.

### BRIEF DESCRIPTION OF THE DRAWINGS

A more complete appreciation of the invention, and many of the attendant advantages thereof, will be readily apparent as the same becomes better understood by reference to the following detailed description when considered in conjunction with the accompanying drawings, in which like reference symbols indicate the same or similar components, wherein:
FIG. 1 is flowchart illustrating an example of a performance management (PM) data processing method;
FIG. 2 is a diagram illustrating the creation and recognition of performance management (PM) data according to the processing method shown in FIG. 1;
FIG. 3 is a block diagram illustrating a performance management (PM) data processing system using a single table according to the invention;
FIG. 4 is a diagram for simply expressing the block diagram shown in FIG. 3;
FIG. 5A illustrates a single table generated by an SQL (Structured Query Language) loader according to the invention;
FIG. 5B illustrates the structure of performance management (PM) data stored in the single table according to the invention;
FIG. 6 is a flowchart illustrating the performance management (PM) data processing method using the single table according to the invention;
FIG. 7 is a diagram illustrating the creation of metadata using the single table according to the invention;
FIG. 8 is a flowchart illustrating the creation of a view schema based upon a view algorithm according to the invention;
FIG. 9 is a diagram illustrating the creation of a view schema based upon the flowchart shown in FIG. 8; and
FIG. 10 illustrates a bar graph for comparing processing capacity and rate of the invention with those of the prior art.

### DETAILED DESCRIPTION OF THE PREFERRED EMBODIMENTS

Hereinafter performance management (PM) data processing system and method using a single table according to the invention will be described in detail with reference to the accompanying drawings.

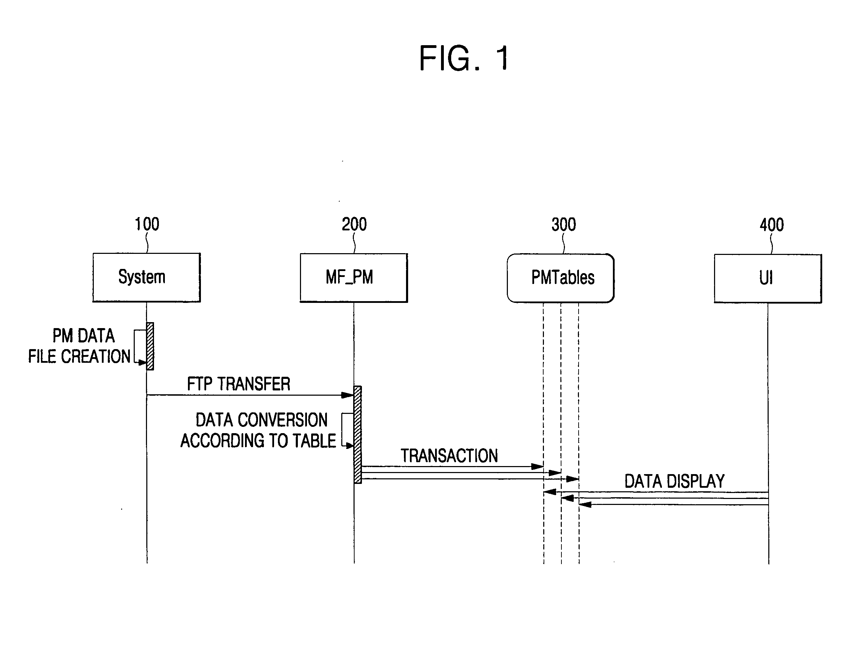

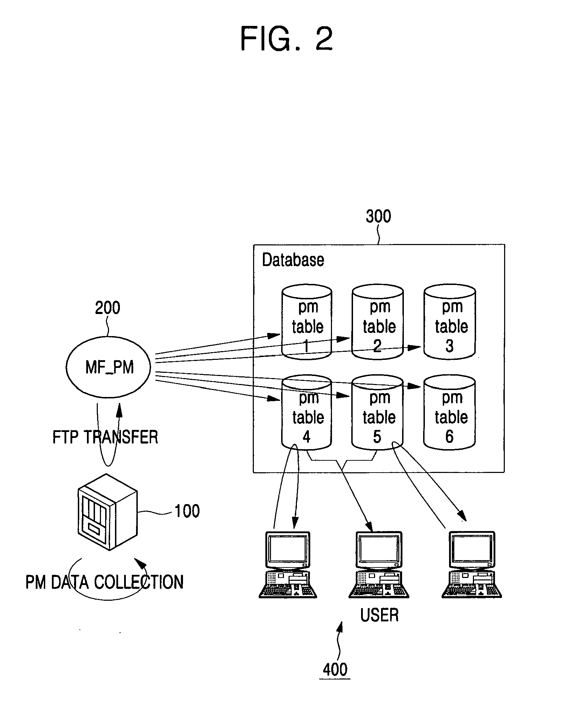

FIGS. 1 and 2 illustrate a data processing process for storing performance management (PM) data as a database.

First of all, a system such as a network system 100 collects at least one performance management (PM) data associated with a number of calls and call connections that simultaneously take place from a number of base stations.

As collected randomly without order, as above, performance management (PM) data are re-classified according to event times and re-written into corresponding files, so that the files can be transferred via File Transfer Protocol (FTP) for next processes.

The file type performance management (PM) data are parsed into specific data formats, which can be recorded according to tables, and transacted using a table mapped with a number of performance management (PM) data each having the same signal type.

Then, the performance management (PM) data are individually allocated according to the signal type in one or more performance management tables in the MF_PM (main frame project manager) 200. In a storage or database 300, the performance management (PM) data containing parameters are stored as tables according to the signal type.

A user, using user interface 400, can read desired performance management (PM) data according to certain parameters, such as time and function, from tables to achieve call-related information carried out in the network.

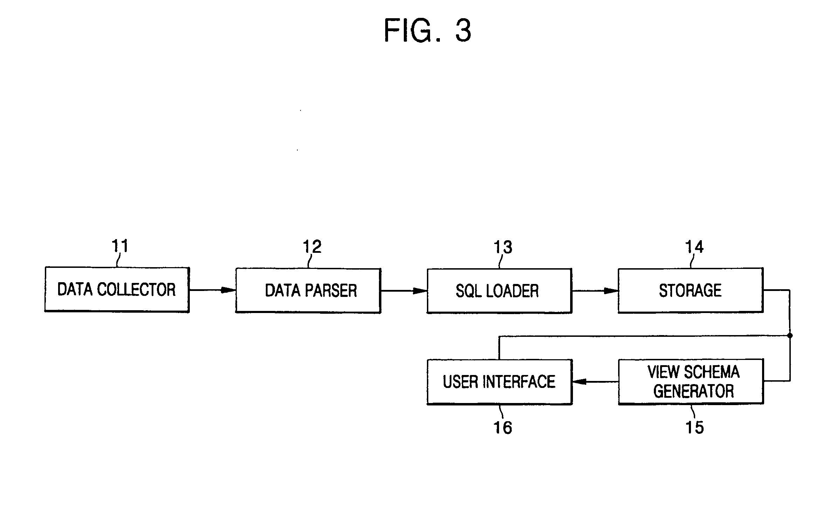

FIG. 3 is a block diagram illustrating a performance management (PM) data processing system using a single table according to the invention.

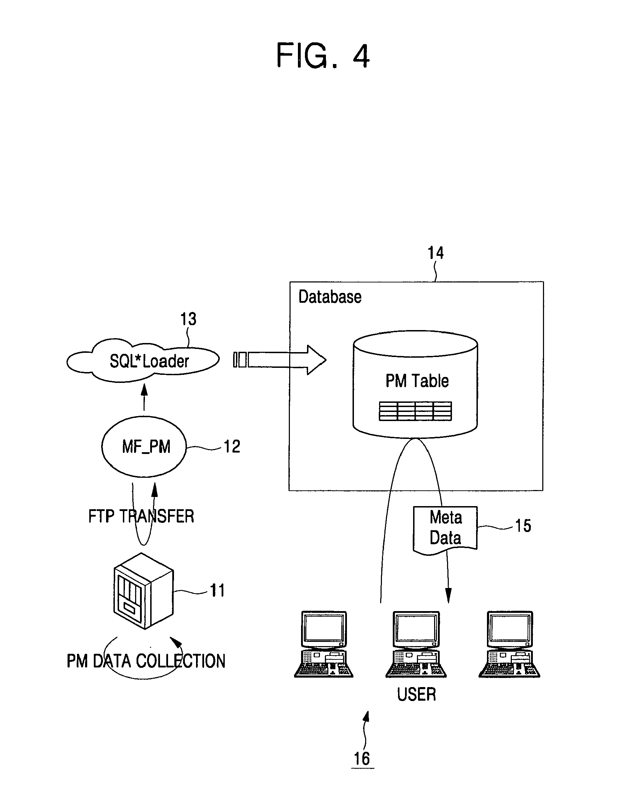

As shown in FIG. 3, a performance management (PM) data processing system of the invention includes a data collector 11, a data parser 12, an SQL loader 13, a storage 14, a view schema generator 15 and a user interface 16. The block diagram shown in FIG. 3 is illustrated again in FIG. 4 for the purpose of easier understanding thereof.

The data collector 11 collects performance management (PM) data, such as SUCCESS RATE, FAIL RATE, TRAFFIC RATE, TOTAL RATE and so on, which are directly and indirectly related with calls occurring between terminals and base stations in an air (wireless) communication network system, and re-writes the collected performance management (PM) data into file types. The re-written performance management (PM) data are transferred via a communication protocol such as File Transfer Protocol (FTP) for next processes.

The data parser (MF_PM) 12 parses an FTP transferred file, i.e., performance management (PM) data, into a specific form of data, such as a text file, that can be recorded according to a single table. The text file is a type of information consisting of letters, numbers and codes of a language readable by the human, and recorded according to a standard code system which can be used by all types of computers.

The SQL (Structured Query Language) loader 13 temporarily stores such text files until they are collected in a predetermined number of 103 or less which can be grouped, when collected in the predetermined number, forms the text files into a group, and executes a one-time transaction to the performance management (PM) data group to be allocated to a single table. Upon being grouped in succession, the performance management (PM) data are transacted according to the group to be allocated to a corresponding single table. In the grouping, the performance management (PM) data are sorted randomly without order regardless of signal type or name, in which the number of grouped performance management (PM) data can be adjusted according to the performance of the SQL loader 13.

The storage 14 stores the single tables created through the transaction by the SQL loader 13 as a database into a predetermined storage area. At the same time, the storage 14 reads metadata (e.g. in the form of an XML (extensible markup language) file) to be mapped with the performance management (PM) data from the single table, and stores the metadata into a storage area matched with the single table. The metadata is created from the text file through the transaction.

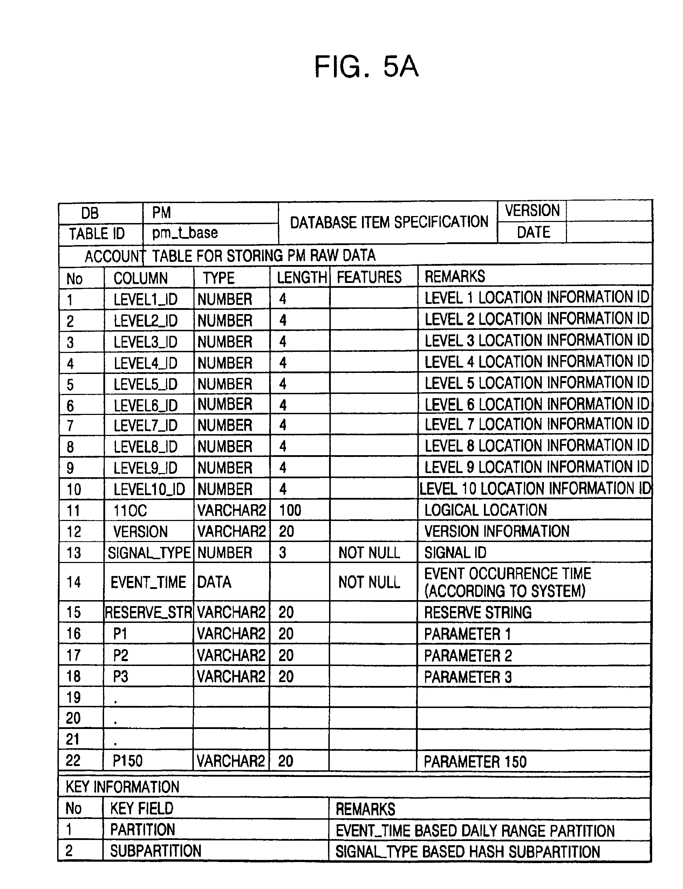

In the single table, as shown in FIG. 5A, all parts except column thirteen are allocated with predetermined elements substantially the same as a typical single table, but performance management (PM) data transacted to column thirteen are allocated up to 103 regardless of signal type. The number of the allocated performance management (PM) data can be variably adjusted (i.e., increased or reduced) according to the network system adapted to process a capacity that is applied in view of the performance and function of the SQL loader 13.

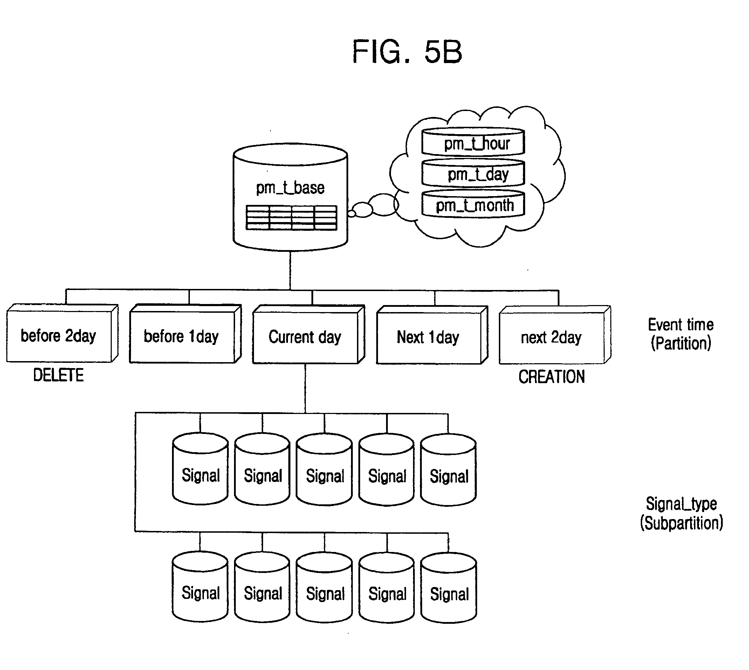

The performance management (PM) data are designated with numbers and stored in assigned columns, as shown in FIG. 5A, so that parameters are used equally regardless of signal types, and stored as CHAR types (Varchar2) of variable lengths in order to reduce the waste of storage space. In addition, the performance management (PM) data are managed according to dates by applying partitioning thereto, and discriminated according to signal types so that the performance management (PM) data can be structured similar to tables, which are independent from one another according to signals, through the application of sub-partitioning. FIG. 5B illustrates the structure of performance management (PM) data stored in the single table according to the invention.

The view schema generator 15 executes the view algorithm to read corresponding performance management (PM) data according to the signal type from the metadata of the single table and parses the performance management (PM) data into a view schema recognizable by users, which can constantly exist if necessary, so that a user can directly retrieve desired performance management (PM) data from the single table stored as the database in the storage 14. This as a result can improve recognition and intuitive understanding by the user.

The user interface 16 is connected with user terminals, and functions to establish a communication line for retrieving desired data from the single table in response to user commands, and provides the user terminals with real-time display of data, which are parsed via a view schema of an imaginary image.

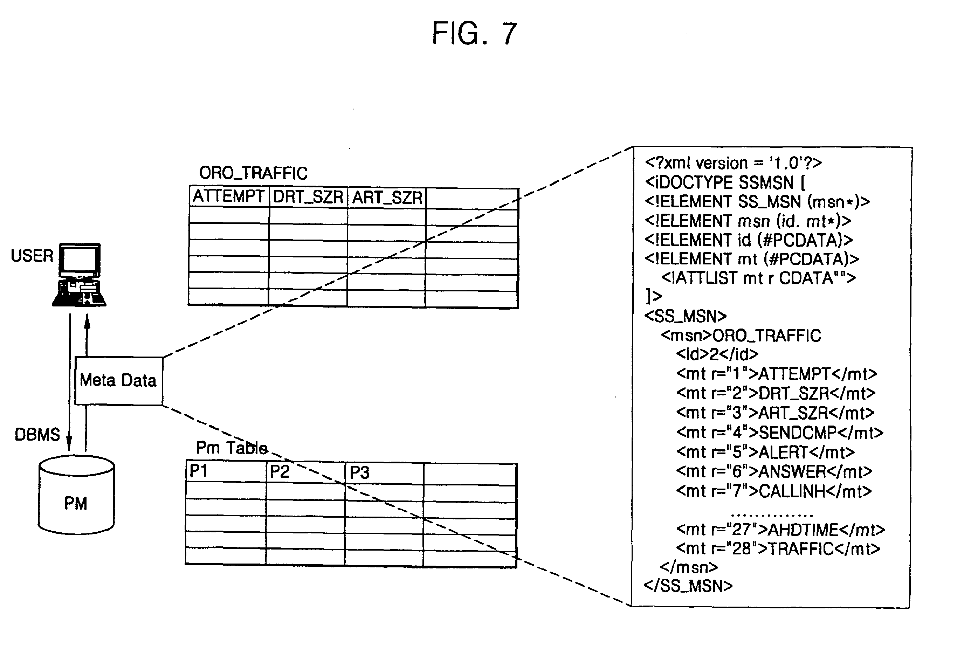

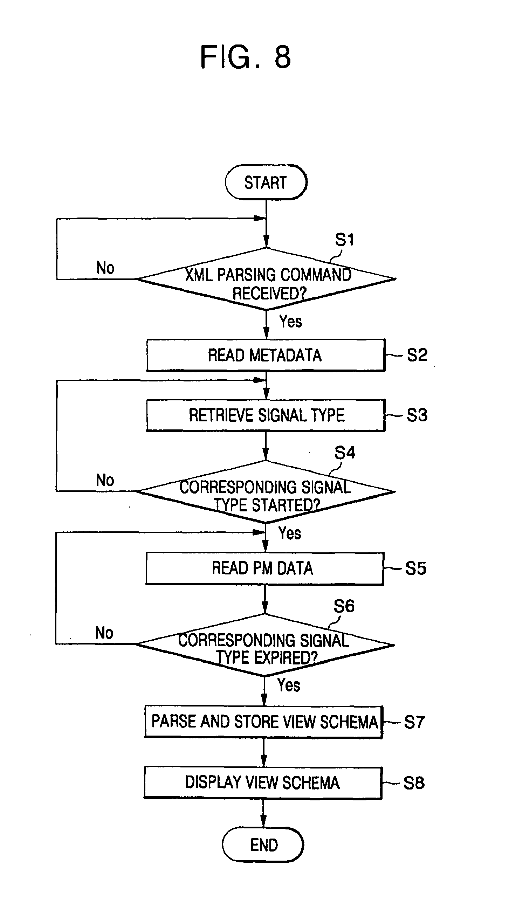

According to the view algorithm, the system receives, as shown in Fig. 8, a parsing command from a user via the user interface 16 in S1, and sequentially reads metadata to be mapped with performance management (PM) data in the single table in S2, as shown in FIG. 7. A designated signal type is retrieved from the read metadata in S3, and it is then judged whether the signal type indicates a starting point or not in S4. When it is judged that the signal type indicates a starting point, performance management (PM) data corresponding to the signal type is read in S5. In S6, the performance management (PM) data is continuously read until the corresponding signal type expires.

When the reading is completed, the performance management (PM) data is parsed into a view schema, and the view schema is temporarily stored into an imaginary vector memory S7. The view schema is displayed on the user terminal in S8.

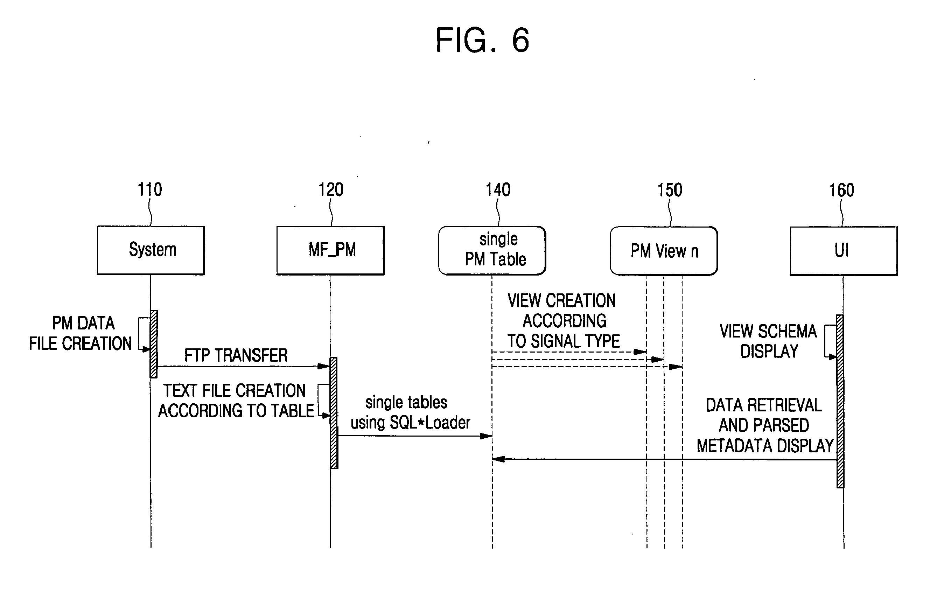

The afore-described performance management (PM) data processing system using the single table of the invention is operated according to a following method with reference to FIG. 6.

First, a network system 110 corresponding to the data collector 11 collects at least one performance management (PM) data related with a number of calls and call connections that take place simultaneously from a number of base stations.

As collected randomly without order, the performance management (PM) data are re-classified according to event times and re-written into corresponding files, so that the files can be transferred according to FTP for next processes.

The file type performance management (PM) data each are parsed by the MF_PM (main frame project manager) 120 into data, which can be recorded according to a single table, and then re-written or converted into text files. Then, the text files are generated in the same number as the whole performance management (PM) data collected in the network. The text files are generally recorded according to standard codes so that all types of computers can use the performance management (PM) data.

When the text files are collected in a single performance management table (PM) table 140 in a predetermined number of 103, or less, that can be processed in one transaction by the SQL 13. Text files of the performance management (PM) data are grouped by such a quantity that can be accepted by the single table. Then, a single transaction is executed to allocate the grouped text files to a column thirteen of a single table as shown in FIG. 5A. Herein, all columns of the single table except the column thirteen are allocated according to a structure the same as that of a typical single table.

The single table periodically generated as above is stored and managed as a database in the storage unit 14. The text files allocated to the column thirteen are parsed into metadata in the form of an XML file mapped with the single table, and stored as a database in corresponding addresses of the storage 14. The metadata consists of parameters of the performance management (PM) data and signal names, and when requested by a user, via user interface 160, sequentially provided to the user via a user terminal as shown in FIG. 7. FIG. 7 illustrates the creation of the metadata from the single table.

In the meantime, the metadata are parsed into a view schema via the view algorithm 150 so as to facilitate recognition by users, according to the view algorithm shown in FIG. 8 as described above.

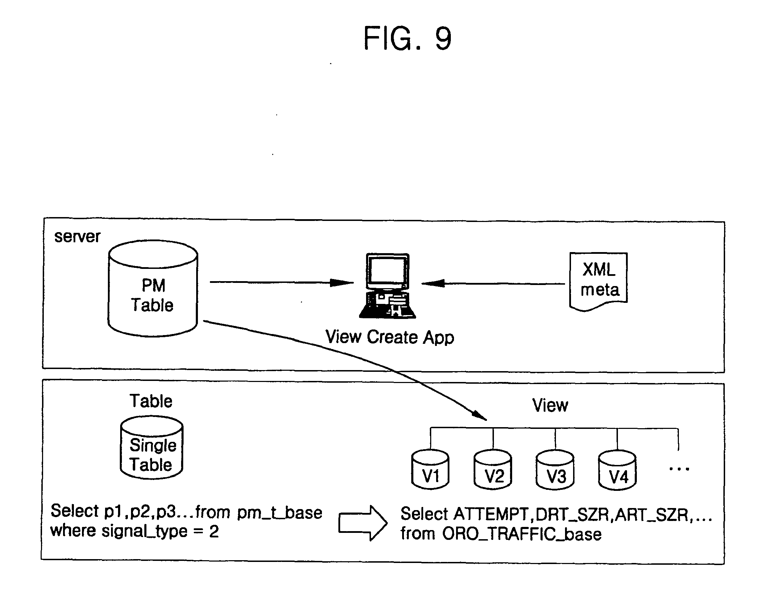

Accordingly, as shown in FIG. 9, the view schema provides an imaginary view which is displayed on the user terminal according to the signal type via the view algorithm for the purpose of providing an improved recognizable image to the user terminal from the metadata of the single table.

That is, since the intuitiveness of the performance management (PM) data is more or less lower when the single table is directly accessed, the view consists of an imaginary image functioning to finely express parameters according to the signal type. Then, the parameters according to the signal type of the performance management (PM) data desired by the user can be easily recognized.

The above-described system and method for processing performance management (PM) data using a single table of the invention can be applied to the storage of networking-associated information as a database and equally to a typical database system other than networking.

The view schema comprises an imaginary view generated via the view algorithm, and the metadata contains parameters and names which are sequentially arranged according to signal types. In addition, the performance management (PM) data comprises performance, operation and management data related with call connections occurring from base stations, and be classified according to signal types, wherein each of the base stations supports at least one of wired and wireless communications

The invention can rapidly and efficiently process performance management (PM) data created from a massive capacity network system as well as improve recognition by users using a single table, thereby maximizing the performance of processing massive data in the single table.

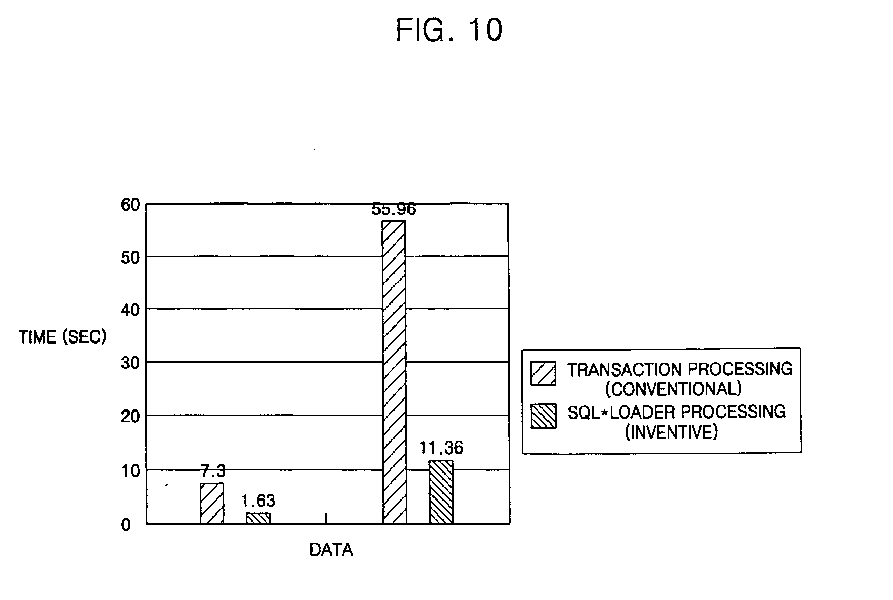

FIG. 10 illustrates a bar graph for comparing processing capacity and rate of the invention with those of the prior art. Referring to the bar graph in FIG. 10, the inventive example reportedly shows a processing rate at least four times faster than that of a conventional example, and as an effect, the invention can more efficiently process a database in execution of massive data.

## Claims

1. A performance management (PM) data processing system using a single table to store performance management (PM) data created from a number of base stations in a network system as a data base, comprising:
a data collector for collecting at least one of the performance management (PM) data, re-writing the collected performance management (PM) data into a file type and transferring the file type performance management (PM) data via File Transfer Protocol (FTP);
a data parser for parsing the file type performance management (PM) data into text files;
a Structured Query Language (SQL) loader for loading a predetermined number of the text files into at least one group, transacting the text files according to groups, and allocating the transacted text files to a single table; and
a storage for storing the single table of the Structured Query Language (SQL) loader and metadata mapped with the performance management (PM) data of the single table as a database.

2. The performance management (PM) data processing system according to claim 1, further comprising:
a view schema generator for parsing the performance management (PM) data read from the metadata of the single table into a predetermined form recognizable by a user to generate a view schema; and
a user interface for operating the view schema generator to provide the view schema to a
user terminal or reading the metadata from the storage to provide the metadata to the user terminal.

3. The performance management (PM) data processing system according to claim 2, wherein the view schema generator executes a view algorithm to generate the view schema according to signal types, wherein the view algorithm comprises:
receiving a parsing command from the user interface;
sequentially reading the metadata mapped with the performance management (PM) data of the single table in response to the parsing command;
retrieving a signal type designated by the metadata to read a corresponding performance management (PM) data;
parsing the read performance management (PM) data into a view schema and temporarily storing the view schema into an imaginary vector memory; and
visually providing the view schema to a user terminal.

4. The performance management (PM) data processing system according to claim 3, wherein the view schema comprises an imaginary view generated via the view algorithm.

5. The performance management (PM) data processing system according to claim 3, wherein the metadata contains parameters and names which are sequentially arranged according to signal types.

6. The performance management (PM) data processing system according to claim 3, wherein the performance management (PM) data comprises performance, operation and management data related with call connections occurring from base station, and is classified according to signal types.

7. A performance management (PM) data processing method using a single table to store performance management (PM) data created from a number of base stations in a network system as a data base, the method comprising the steps of:
collecting at least one of the performance management (PM) data, re-writing the collected performance management (PM) data into a file type and transferring the file type performance management (PM) data via File Transfer Protocol (FTP);
parsing the file type performance management (PM) data into text files;
grouping a predetermined number of the text files into at least one group, transacting the text files according to groups, and allocating the transacted text files to a single table; and
storing the single table as a database according to groups.

8. The performance management (PM) data processing method according to claim 7, further comprising the step of sequentially storing the metadata mapped with the performance management (PM) data of the single table as a database.

9. The performance management (PM) data processing method according to claim 8, further comprising the step of parsing the performance management (PM) data read from the metadata of the single table into a predetermined form recognizable by a user to generate a view schema.

10. The performance management (PM) data processing method according to claim 9, further comprising the step of selectively providing the view schema or the metadata to a user terminal.

11. The performance management (PM) data processing method according to claim 9, wherein the parsing step comprises executing a view algorithm to parse the view schema of the performance management (PM) data from the metadata according to signal types.

12. The performance management (PM) data processing method according to claim 11, wherein the view schema comprises an imaginary view generated via the view algorithm.

13. The performance management (PM) data processing method according to claim 12, wherein the view algorithm comprises the steps of:
receiving a parsing command from the user interface;
sequentially reading the metadata mapped with the performance management (PM) data of the single table in response to the parsing command;
retrieving a signal type designated by the metadata to read a corresponding performance management (PM) data;
parsing the read performance management (PM) data into a view schema and temporarily storing the view schema into an imaginary vector memory; and
visually providing the view schema to a user terminal.

14. The performance management (PM) data processing method according to claim 13, wherein the performance management (PM) data comprises performance, operation and management data related with call connections occurring from base stations, and is classified according to signal types.

15. The performance management (PM) data processing method according to claim 14, wherein each of the base stations supports at least one of wired and wireless communications.

16. The performance management (PM) data processing method according to claim 17, wherein the grouping step groups the performance management (PM) data by a number of at least 103.
